Europäisches Patentamt

European Patent Office

Office européen des brevets

(19)

(11) Veröffentlichungsnummer: **0 298 023**
**B1**

(12) **EUROPÄISCHE PATENTSCHRIFT**

(45) Veröffentlichungstag der Patentschrift: **16.01.91**

(51) Int. Cl.⁵: **F 16 L 33/22,** F 16 L 37/18

(21) Anmeldenummer: **88810381.9**

(22) Anmeldetag: **09.06.88**

(54) Schlauchkupplung.

(30) Priorität: **29.06.87 CH 2467/87**

(43) Veröffentlichungstag der Anmeldung:
**04.01.89 Patentblatt 89/01**

(45) Bekanntmachung des Hinweises auf die
Patenterteilung:
**16.01.91 Patentblatt 91/03**

(84) Benannte Vertragsstaaten:
**AT BE CH DE ES FR GB GR IT LI LU NL SE**

(56) Entgegenhaltungen:
**CH-A- 170 171**
**CH-A- 306 732**
**CH-A- 651 907**
**FR-A-2 167 374**
**FR-A-2 206 827**
**FR-E- 96 164**

(73) Patentinhaber: **ECONT CORPORATION LIMITED**
**Schaanerstrasse 79**
**FL-9487 Bendern (LI)**

(72) Erfinder: **Kersting, Wolfgang**
**Schulstrasse 122**
**FL-9485 Nendeln (LI)**

(74) Vertreter: **White, William et al**
**Isler AG Patentanwalts-Bureau Walchestrasse
23**
**CH-8006 Zürich (CH)**

Courier Press, Leamington Spa, England.

## Beschreibung

Bei bekannten Schlauchkupplungen wird in das Schlauchende eine Stützhülse mit sägezahnartigen Nuten eingeschoben, gegen welche des Schlauchende von aussen radial gepresst wird. Der Nachteil dieser Schlauchkupplungen besteht darin, dass mit der Stützhülse der Durchtrittsquerschnitt des Schlauches verengt wird.

Durch FR—E—96164 kennt man auch eine Schlauchkupplung mit einem außen am Schlauch durch eine Gewindererbindung befestigen Kupplungsstück, sowie mit einer inneren Stützhulse.

Der Erfindung liegt die Aufgabe zugrunde, den obengenannten Nachteil zu beseitigen. Diese Aufgabe wird mit den kennzeichneten Merkmalen des Anspruchs 1 gelöst.

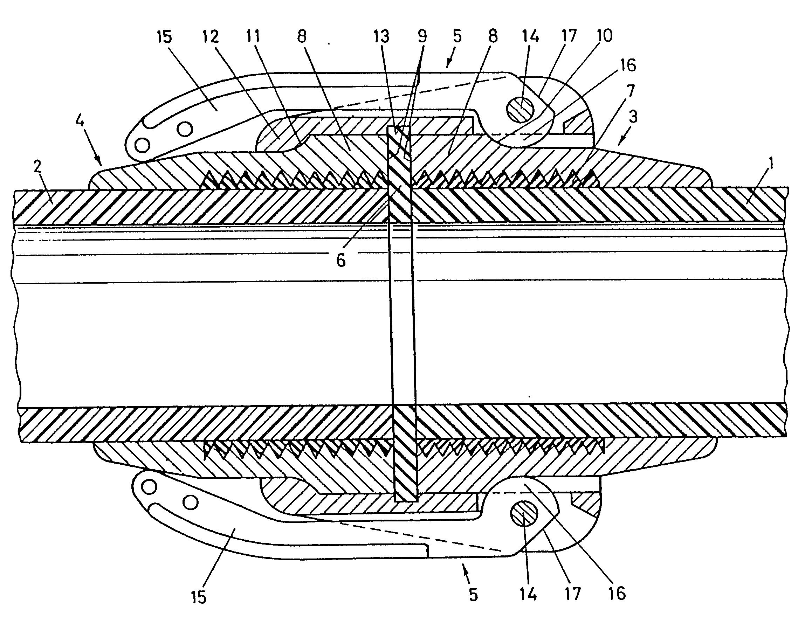

Nachfolgend wird ein Ausführungsbeispiel der Erfindung anhand der Zeichnung erläutert. Die einzige Figur zeigt einen Axialschnitt durch eine erfindungsgemässe Schlauchkupplung.

Die dargestellte Schlauchkupplung verbindet die Enden zweier Schläuche 1, 2. Sie umfasst je ein auf den Enden der Schläuche 1, 2 befestigtes Kupplungsstück 3, 4 und ein die Kupplungsstücke 3, 4 miteinander verbindendes Kupplungsschloss 5 sowie einen elastomeren Dichtring 6. Jedes Kupplungsstück 3, 4 besteht aus einem auf den Aussenumfang des Schlauches 1, 2 aufgeklebten oder aufvulkanisierten Aussengewinde 7 und einer auf das Aussengewinde 7 mit einem zugefügten Gleitkleber aufgeschraubten Muffe 8 z.B. aus Temperguss. Das Aussengewinde 7 besteht entweder aus einem wendelförmig auf das Schlauchende aufgeklebten oder aufvulkanisierten Stab mit dreickigem Querschnitt aus Kunststoff oder Gummi, insbesondere aus einem Elastomer, oder aus einer längsgeschlitzten Hülse aus Kunststoff oder Gummi. Als Kleber eignet sich ein Kontaktkleber. Bei einem thermoplastischen Schlauch 1, 2 kann das Aussengewinde 7 ebenfalls aus Thermoplast bestehen und aufgeschweisst sein.

Die Muffe 8 hat ein Innengewinde entsprechend dem Aussengewinde 7. In der dargestellten Ausführungsform ist das Aussengewinde 7 kürzer als die Muffe 8, doch kann es sich auch über deren gesamte Länge erstrecken, was die Festigkeit der Verbindung zwischen Muffe 8 und Schlauch 1, 2 erhöht. Die Muffe 8 hat eine eben Stirnseite 9 zur Anlage am Dichtring 6 und ein von der Stirnseite 9 abgewandte Schulter 10, 11 zum axialen Anpressen der beiden Kuppluntsstücke 3, 4 gegeneinander mittels des Kupplungsschlosses 5.

Des Kupplungsschloss 5 ist aus Aluminium oder Temperguss gefertigt, von hinten über das Kupplungsstück 4 geschoben und liegt mit einem verengten Flansch 12 an dessen Schulter 11 an. Es hat eine Umfangsnut 13, in welcher der Dichtring 6 sitzt. An seinem freien Ende sind auf Bolzen 14 zwei Hebel 15 aus Temperguss schwenkbar gelagert. Sie haben einen exzentrischen Nocken 16, der gegen die Schulter 10 des Verschlusstücks 3 anliegt und dieses in der dargestellten Stellung der Hebel 15 axial gegen das Verschlusstück 3 presst. Bei geöffneten Hebeln 15 fluchtet eine Abflachung 17 mit dem Innendurchmesser des Kupplungsschlosses 5, so dass das Kupplungsstück 3 entfernt oder eingeführt werden kann.

Zur Anlage gegen die Schulter 11 des Kupplungsstücks 4 kann statt des Flansches 12 auch ein zweites Paar von Hebeln entsprechend der Hebel 15 mit analog den Nocken 16 und Abflachungen 17 ausgebildeten Nocken und Abflachungen am Kupplungsschloss angeordnet werden. Dies hat den Vorteil, dass des Kupplungsschloss nicht vor der Montage des Kupplungsstücks 4 auf den Schlauch 2 aufgeschoben werden muss. Zum gleichen Zweck kann des Kupplungsschloss 5 auch zweiteilig ausgebildet werden, indem es z.B. in der Bildebene der Figur geteilt und zweckmässig durch die als Schrauben ausgebildeten Bolzen 14 zusammengehalten ist.

Die dargestellte Schlauchkupplung hat einen unverengten Durchtrittsquerschnitt. Durch das aufgeklebte, aufvulkanisierte oder aufgeschweisste Aussengewinde 7 und die darauf aufgeschraubte Muffe 8 wird eine zuverlässige, starke Verbindung der Muffe 8 mit dem Schlauch 1, 2 erreicht.

## Patentansprüche

1. Schlauchkupplung mit einem außen am Schlauch (1, 2) durch ein Gewindeverbindung befestigten Kupplungsstück (3, 4), dadurch gekennzeichnet, dass das Kupplungsstück (3, 4) aus einem am Schlauchende auf dessen Aussenumfang aufgeklebten, aufvulkanisierten oder aufgeschweissten Aussengewinde (7) und einer auf das Aussengewinde (7) mit einem zugefügten Kleber aufgeschraubten Muffe (8) besteht.

2. Kupplung nach Anspruch 1, dadurch gekennzeichnet, dass das Aussengewinde (7) aus einem wendelförmig um das Schlauchende gewickelten Stab mit dreieckigem Querschnitt aus Kunststoff oder Gummi besteht.

3. Kupplung nach Anspruch 2, dadurch gekennzeichnet, dass der Kunststoff oder Gummi ein Elastomer ist.

4. Kupplung nach Anspruch 1, dadurch gekennzeichnet, dass das Aussengewinde (7) aus einer längsgeschlitzten Hülse aus Kunststoff oder Gummi besteht.

5. Kupplung nach einem der Ansprüche 1 bis 4, dadurch gekennzeichnet, dass die Muffe (8) eine vom Schlauchende abgewandte Schulter (10, 11) aufweist.

6. Kupplung nach Anspruch 5, dadurch gekennzeichnet, dass vom Schlauchende her ein Kupplungsschloss (5) über die Muffe (8) geschoben ist, an welchem zwei Hebel (15) mit je einem Exzenternocken (16) schwenkbar gelagert sind, und dass die Exzenternocken (16) bie am Kupplungsschloss (5) anliegenden Hebeln (15) an der Schulter (10) anliegen.

7. Kupplung nach Anspruch 6 zur Verbindung von zwei Schlauchenden, wobei beide Schlauchenden je eines der Kupplungsstücke (3, 4) aufweisen, dadurch gekennzeichnet, dass über das erste Kupplungsstück (4) das and deren Schulter (11) anliegende Kupplungsschloss (5) geschoben ist, und dass die Exzenternocken (16) in dem das erste Schlauchende überragenden Abschnitt des Kupplungsschlosses (16) angeordnet und mit der Schulter (10) des zweiten Kupplungsstücks (3) im Eingriff sind.

8. Kupplung nach Anspruch 7, dadurch gekennzeichnet, dass zwischen den beiden Kupplungsstücken (3, 4) ein elastomerer Dichtring (6) angeordnet ist.

## Revendications

1. Raccord pour tuyau flexible, comprenant une pièce d'accouplement (3, 4) fixée extérieurement au tuyau flexible (1, 2) par un assemblage à vis, caractérisé en ce que la pièce d'accouplement (3, 4) se compose d'un filetage extérieur (7) fixé par collage, vulcanisation ou soudage à l'extrémité du tuyau flexible, sur le pourtour extérieur de celui-ci, et d'un manchon (8) qui est vissé sur le filetage extérieur (7) avec addition d'une colle.

2. Raccord selon la revendication 1, caractérisé en ce que le filetage extérieur (7) est constitué par un jonc de section triangulaire en matière plastique ou en caoutchouc, enroulé en hélice autour de l'extrémité du tuyau flexible.

3. Raccord selon la revendication 2, caractérisé en ce que la matière plastique ou le caoutchouc est un élastomère.

4. Raccord selon la revendication 1, caractérisé en ce que le filetage extérieur (7) est constitué par une douille fendue longitudinalement en matière plastique ou en caoutchouc.

5. Raccord selon l'une quelconque des revendications 1 à 4, caractérisé en ce que le manchon (8) présente un épaulement (10, 11) orienté à l'opposé de l'extrémité du tuyau flexible.

6. Raccord selon la revendication 5, caractérisé en ce qu'il est glissé sur le manchon (8), depuis l'extrémité du tuyau flexible, un verrou d'accouplement (5) sur lequel sont montés pivotants deux leviers (15) comportant chacun une came excentrique (16), et en ce que les cames excentriques (16) s'appliquent sur l'épaulement (10) lorsque les leviers (15) sont appliques sur le verrou d'accouplement (5).

7. Raccord selon la revendication 6, pour l'assemblage des extrémités de deux tuyaux flexibles, les extrémités des deux tuyaux flexibles comportant chacune l'une des pièces d'accouplement (3, 4), caractérisé en ce qu'il est glisse, sur la première pièce d'accouplement (4), le verrou d'accouplement (5) qui s'applique sur l'épaulement (11) de celle-ci, et en ce que les cames excentriques (16) sont disposés dans la partie du verrou d'accouplement (5) qui fait saillie sur l'extrémité du premier tuyau flexible et sont en prise avec l'épaulement (10) de la seconde pièce d'accouplement (3).

8. Raccord selon la revendication 7, caractérise en ce qu'un anneau d'étanchéite en élastomére (6) est disposé entre les deux pièces d'accouplement (3, 4).

## Claims

1. Hose coupling having a coupling piece (3, 4) fixed to the outside of hose (1, 2) by a threaded connection, characterized in that the coupling piece (3, 4) consists of an external thread (7), which is bonded, galvanized or welded onto the outside circumference of the end of the hose, and a bushing (8), which is screwed onto the external thread (7) with an added bonding agent.

2. Coupling according to Claim 1, characterized in that the external thread (7) consists of a rod made of plastic or rubber, which is wound around the end of the hose in a spiral and has a triangular cross-section.

3. Coupling according to Claim 2, characterized in that the plastic or rubber is an elastomer.

4. Coupling according to Claim 1, characterized in that the external thread (7) consists of a longitudinally slit sleeve made of plastic or rubber.

5. Coupling according to Claims 1 to 4, characterized in that the bushing (8) has a shoulder (10, 11) facing away from the end of the hose.

6. Coupling according to Claim 5, characterized in that a coupling lock (5) is pushed over the bushing (8) from the end of the hose, on which coupling lock two levers (15), each having an eccentric cam (16), are mounted in a swivelling manner, and in that the eccentric cams (16) rest on the shoulder (10, 11) when the levers (15) rest on the coupling lock (5).

7. Coupling according to Claim 6 for the connection of two ends of hose, the two ends of hose each having one of the coupling pieces (3, 4), characterized in that the coupling lock (5) resting on the shoulder (11) of the first coupling piece (4) is pushed over the first coupling piece (4), and in that the eccentric cams (16) are arranged in the section of the coupling lock (16) projecting over the first end of hose and are engaged with the shoulder (10) of the second coupling piece (3).

8. Coupling according to Claim 7, characterized in that an elastomeric sealing ring (6) is arranged between the two coupling pieces (3, 4).